# EUROPEAN PATENT APPLICATION

(11) **EP 4 275 513 A1**
(43) Date of publication of application: **15.11.2023**
(21) Application number: 22382466.5
(22) Date of filing: 13.05.2022
(51) Int. Cl.: A23L 5/10, A21B 1/24, A21B 1/48, A23L 3/40

(54) **METHOD TO THERMALLY TREAT FOOD PRODUCTS**

(71) Applicant: Metalquimia, S.A.U., 17007 Girona (ES)
(72) Inventor: LAGARES GAMERO, Josep, 17850 Besalú (ES)
(74) Representative: Torner, Juncosa I Associats, SL

(57) **Abstract**

A method to thermally treat food products in an oven-plant that comprises an oven and an external heating unit if proposed. The food products are submitted to a controlled laminar flow of air for a predetermined time, and the controlled laminar flow of air is heated in the external heating unit. The air is heated to a temperature selected according to the nature, size and composition of the food products to be treated, being the temperature up to 250 ºC, thermally treating food products includes cooking until the food product reaches a given internal temperature, a weight loss and/or an activity water, and baking and/or dehydrating according to the nature, size and composition of the food products to be treated, the cooking, baking and/or dehydrating of food products is performed in the same oven, and the controlled laminar flow of air is equal to or lower than 2 m/s.

## Description

### TECHNICAL FIELD

The present invention relates to a method of thermally treating food product.

### BACKGROUND ART

The thermal processing of ready-to-eat (RTE) protein-based food, pet food and snacks with a baking oven generally involves a different degree of heat and mass transfer between the product to treat and the treatment media. Heat transfer from the treatment fluid to the product, and mass transfer from the product to the treatment fluid is the most common combination, with different ratios depending on the product type, size and composition, process and target temperatures, and temperature and moisture content of the treatment media.

Usually, the target is to cook the product until certain temperature in the center so it can be considered safe (FSIS Cooking Guideline for Meat and Poultry Products (Revised Appendix A), December 2021), minimizing the weight loss during the process (RTE patties and sausages, pre-cooked steaks, grilled chicken parts and so). These type of heat treatments relay on a short time and high temperature, including the injection of sanitary steam in the treatment air to moisturize it, so air enthalpy increases and heat transfer from the treatment air to the product is optimized, reducing the overall process time.

In some other applications, not only a certain core temperature must be reached to fully cook the product, but also a certain weight loss is required to deliver a product with a maximum moisture content and/or a specific water activity (a_{w}) level. In such applications, the mass transfer from the product to the treatment air (in the form of gas water) is much higher than in a simple cooking process, so it generally requires lower temperature and longer time than the last one, so charring and excess of browning are avoided. A common example would be pre-cooked bacon aiming a weight loss of 60% and average a_{w} not exceeding 0.78 (Meat Inspection Regulations, 9 CFR Parts 301-350) or meat snacks and pet treats where the target is reaching a a_{w} below 0.85 or less, so pathogenic bacteria cannot grow on the product (Matz).

These disparities in the combination of time and process conditions when using forced air convection cooking, depending on the weight loss target and cooking conditions, has derived in a common separation between batch processing with trolleys in individual ovens (hanging the product or placing it on racks) and continuous convection ovens (placing the product on a conveyor belt).

The batch type forced air convection static ovens, or batch ovens, are the most common technology used in small and medium plants, due to the ease in scalability and flexibility when working with a broad portfolio of products.

The principle for air distribution in batch ovens is based on fans and moving dampers and flaps that adjust the flow of air to each side and the direction of this air. In any case, achieving an optimal heat distribution throughout the different trolleys levels is extremely complicated, forcing to reduce the product load and/or increase the process time in order to get a homogenous final cooking result.

On the other hand, is the common selection when the cooking process is associated with long dwell times, like a pasteurizing with long cooking times, or drying processes that require several hours and a progressive adjustment of the relative humidity of the air to avoid case hardening of the product.

Impingement linear conveyor ovens are a relatively new technology and one of the best solutions for a fast and homogeneous cooking and baking of RTE products, very sensitive to thermal process conditions, because of the homogenous and consistent distribution of the air and temperature when using an impingement air distribution.

The hot air is distributed with plenums tubes and directed to the product over and below on the belt through nozzles that generate high-speed air jets. The high air velocity (10 - 100 m/s) achieved on the product surface removes the boundary layer and maximizes the fluid heat transfer to the product.

The main handicap for the application of this technology is the processing time because long dwell times require a higher belt length to maintain the ratio of kg of product per hour and, consequently, this is very limiting when planning the layout of a feasible further processing plant.

On the other hand, the forced air convection spiral oven technology has reached an extremely efficient cooking capacity, with an even distribution of the air and a minimum temperature difference between the different spiral tiers and within the belt width, but reaching this result is done through the movement of a huge volume of air at high-speed requiring a high-power thermal capacity, which in turns limits the overall spiral size and its output capacity.

With the current forced air convection spiral ovens design found in the market the air is suctioned from the upper part of the spiral and expelled axially through indirect heat exchangers that heat it up. This system generates a high-speed air flow that returns to the heating coil going through the different tiers of the spiral, transferring heat to the product on its way.

When reaching a minimum air velocity over the product geometry, the boundary layer can be removed, so the result of the process is highly based on the air speed and a constant flow of product into the spiral, because small and light pieces will fly away and uneven product loading will deliver inconsistent final product quality.

### SUMMARY OF THE INVENTION

The present invention is directed towards a method to thermally treat food products in an oven-plant that comprises an oven and an external heating unit wherein the food products are submitted to a constant controlled laminar flow of air for a predetermined time, and the constant controlled laminar flow of air is heated in the external heating unit, characterized in that the air is heated to a temperature selected according to the nature, size and composition of the food products to be treated, being the temperature of up to 250 ºC, thermally treating food products includes cooking until the food product reaches a given internal temperature, a weight loss and/or an activity water, and further baking and/or dehydrating according to the nature, size and composition of the food products to be treated, the cooking, baking and/or dehydrating of food products is performed in the same oven, and the constant controlled laminar flow of air is equal to or lower than 2 m/s.

The constant controlled laminar flow has to be low, and 2 m/s is the upper limit. If the flow is higher, the food products are displaced by the air and the thermal treatment (cooking, baking and/or dehydrating) is defective.

The constant controlled laminar flow delivered to the food products preferably includes vapor allowing for relative humidity control in the oven. The vapor is preferably water vapor.

The food products are preferably disposed onto a conveyor belt defining a path extending through the oven. The conveyor belt might be preferably disposed on a spiral comprising a plurality of belt tiers.

In a preferred embodiment, the constant controlled heated laminar flow of air is laterally delivered and to one, to more than one and/or to all the belt tiers. Preferably, the air is supplied by means of an air distribution pipe and is extracted by means of an air collection pipe, the air distribution pipe and the air collection pipe arranged opposite, on opposed sides of the belt tiers.

Furthermore, heated air can be selectively applied, therefore several applications can be performed on the go, that is, for example a part of the oven might be heated to 60ºC while another part might be simultaneously heated at 110ºC.

The constant controlled heated laminar flow of air has preferably a relative humidity of between 2% to 95%, being selected according to the nature, size and composition of the food products to be treated. In a preferred embodiment, the relative humidity is of between 5% and 30%. Alternatively, in another embodiment, the relative humidity is of between 35% and 80%.

The time of thermally treating food is between 5 minutes and 10 hours and is selected according to the nature of the food product to be treated. Preferably, the time is between 5 and 60 minutes, more preferably from 5 to 50 minutes.

The air is preferably heated to a temperature of 60ºC to 230 ºC. The air can be heated from as low as 30ºC, to 250ºC. Working temperatures, depending on the nature, size and/or composition of the food products can be, for example, 65ºC, 75ºC, 95ºC, 110 ºC, 150 ºC, 180 ºC, 210 ºC. The wide range of working temperatures allows to perform the steps of cooking, baking and dehydrating in the same oven. This represents a significant advantage over the prior art, since traditional ovens do not allow cooking, baking and/or dehydrating to be carried out in the same equipment. Furthermore, the high temperatures allow, for example, to fry food products without oil.

The activity water (a_{w}) reached by the food products is preferably lower than 0,9, more preferably lower than 0,8, more preferably lower than 0,7, more preferably lower than 0,6.

The weight loss of the food products is preferably 15% or more. More preferably, the weight loss of the food products is 20% or more, 30% or more, 40% or more, 50% or more.

In the method according to the present invention, the food products are preferably selected from meat protein-based snacks, meat products, plant-based protein snacks and meat-based pet treat and snacks. In a preferred embodiment, the food products are ready-to-eat meat-based or plant-based food products.

### DESCRIPTION OF THE INVENTION

To overcome the application limits of the existing cooking and drying technology, the present invention discloses a system (QDS bake^{®}) that combines the homogenous distribution of the air across the different tiers of a spiral belt together with a high output capacity despite of the dwell time or weight loss of the end product.

This system is based in the long-time previous experience in the application field of forced convection cooking and drying systems, both for low temperature drying solutions for dry cured meat products and combined pasteurizing and drying solutions for snacks and protein toppings.

The system is formed by three main parts, the air handling unit, the air distribution system and the spiral conveyor product transport system. It is the interaction of all these three elements, together with the control integration of the air, that allows to deliver a consistent result regardless of the product load or geometry.

Laminar flow is, by definition, an uninterrupted flow of a fluid near a solid boundary in which the direction of flow at every point remains constant, whereas turbulent flow is defined as a fluid flow in which the velocity at a given point varies erratically in magnitude and direction (Merriam-Webster Collegiate Dictionary, 11th Edition). Forced convection of the air through the drying system in the QDSbake^{®} is based on a laminar flow generated by means of an impulsion and suction effect of the air, in order to avoid the need to use a high-speed flow to homogenize the air distribution among the different tiers and treatment sections.

This push/pull effect is obtained by means of an air distribution pipe that conduits the treatment air to the spiral belt system and this air is blown horizontally with an equal flow through each tier by its own horizontal groove. Several air distribution pipes are positioned around the spiral structure to fully cover the whole perimeter; hence the product constantly receives a laminar flow of air in any of the spiral level positions.

On the opposite side of the conveyor where the air distribution pipe is blowing the air into the system, there is an air collection pipe aspirating this air to generate a continuous flow around the product, avoiding the mixing of the air between levels and, most importantly, eliminating turbulences and hot air ascending movement associated with this kind of applications.

Because the maximum air speed in the outlet of each groove is not more than two meters per second, a 600 mm wide spiral conveyor belt with 30 tiers and 12 linear meters, can run a forced air convection cooking and baking with no more than 30.000m³/h air flow, reducing the overall required capacity for air movement (fans and motors) and the air treatment systems (gas burner chambers and coils).

A low-speed laminar flow also ensures a homogeneous air distribution with the possibility of cooking and dehydrating thin and light products (e.g., meat chips) without the effect of having the product being lifted up of the belt or overlapping due to an excessive air speed. Unlike most of the existing forced convection ovens (both static and continuous) the treatment air is not heated inside the actual oven structure but in an external Air Handling Unit (AHU). The air is collected from the distribution system in the oven to the AHU and there it is heated up again to the air temperature setpoint in the area of treatment by means of an ultra-low NOx gas burner. The use of a single gas burner provides several advantages, but main is the higher efficiency in the energy use compared to any other indirect system because there is no heat loss due to the heating coils and conducting systems, as the gas is directly injected in the burner and the air stream provides the required oxygen for the combustion, with the added advantage of an overall size reduction of the system, as the required burner cavity is smaller and no exchanging coils are required (Fellows, P.J. "Baking and Roasting." Food Processing Technology: Principles and Practice, 4th ed., Elsevier Ltd., 2017, pp. 735-740).

Two main sections can be distinguished in the AHU system: air impulsion section and air returning section.

In the impulsion section a speed controller, for instance a VFD controlled blower, keeps a constant flow of air into the pipe carrying the air into the spiral treatment area. The air flowing in this pipe is partly diverted to the burner combustion chamber, after the impulsion section, to heat up a variable amount of air to a certain temperature in order to achieve the required amount of heat in the treatment air. The air arriving at the spiral treatment area will be already mixed up to obtain a homogeneous temperature distribution throughout the system, ranging from 60ºC to 250ºC. Several temperature and flow sensors before and after the combustion chamber allow the machine to adjust the actual air conditions (temperature, relative humidity and flow) to the setpoint of each recipe.

In the return section of the AHU, the air is aspired by a second centrifugal fan and a set of automatic dampers adjust the opening of the exhausting and air renewal, using a Heat Recovery Battery to pre-heat the inlet air from the outside with the counterflow exchange of the exhaust hot air, with a recovery capacity of up to 70% of the heat. Furthermore, the inlet air runs through a HEPA filter with a filtering capacity up to H13, to minimize the risk of contaminated air with microorganisms or particles getting into the system.

This combination of systems in the AHU delivers a smooth control of the temperature of the air arriving to the treatment area, avoiding hot spots, and a very accurate adjustment of the air relative humidity (RH), with an accessory food grade steam injection system in the air stream to achieve percentage of RH whenever a high moisture cooking process is required. And for a higher food safety level of the air, a constant minimum higher pressure is kept in the impulsion air against pulled air, to ensure no outside and unfiltered air gets into the piping circuit.

Once the air leaves the AHU it goes into an air piping distribution system, consisting in a circular plenum on the top of each vertical section of the spiral, from where a series of vertical distribution conduits will encircle the spiral and deliver the air treatment to each single belt tier.

The distribution conduits have a rectangular section, with a stainless-steel wall in the inside part, close to the spiral belt structure, and a high temperature resistant factory material on the outside. This proven system minimizes the dynamic pressure (the kinetic energy per unit volume of a fluid) inside the conduit, increasing the static pressure ratio against the dynamic pressure for the air to be introduced in the spiral and allowing a completely homogenous air discharge in the vertical and horizontal section with a low air speed for the industry standard.

Once the air flows into the spiral belt level through its specific individual groove, it goes all the way from one side of the belt to the other, running around the product to be cooked and /or dehydrated. On the other side a second opposite conduit pulls this air back again to the AHU to be standardized again to the required setpoints because of the depression generated by the blower on the suction section in the AHU.

On each spiral there are two groups of vertical distribution conduits to generate a counterflow entrance of the air in the treatment section of the spiral, avoiding gradients of weight loss between the different zones of the belt and improving the consistency of the output quality, mainly for products that require a high degree of water loss during the process (e.g. crispy bacon, beef jerky or dry pet treats).

Product is directly submitted on the stainless-steel mesh conveyor belt and moved through all the different levels of the spiral, where it gets in contact with the laminar flow stream of air, and depending on the air conditions (temperature and relative humidity), it can be cooked, baked and/or dehydrated.

Depending on the spiral belt number of tiers and number of spirals, several different treatment areas can be used during the processing of the product. This is possible because the air distribution system is designed for a treatment area of 15 tiers, hence a spiral belt with 30 levels can have two independent product treatment sections, and when a single belt double spiral system is built a total of 4 different product treatment sections can be independently set for each recipe.

The broad range of temperature and relative humidity to be set for each process, together with the capacity to eliminate a big amount of moisture evaporated from the product by exhausting part of the recirculating air, allows the application of the QDSBake^{®} not only to cooking or baking or dehydrating processes, but to any combined recipe where different stages must be combined to deliver a specific final product.

This flexibility doesn't affect the overall energy efficiency of the system because the combination of the AHUs for the air flow and pressure control (together with a high efficiency heat recovery) and the direct Ultra-Low NOX gas burners systems provides the capacity to exchange a high rate of recirculating air with the outside through the exhausting while recovering most of the heat in the exhausting air.

Therefore, the QDSBake^{®} laminar flow air oven solution is a promising alternative to existing ovens in the market, which are very specialized in concrete applications for cooking, steaming or baking. The system provides the ability to run air at low speed and evenly throughout the different levels of a spiral belt conveyor, with independent treatment areas with adjustable air conditions settings.

This flexibility provides the industry with the solution to innovate in the research of new product developments, combining different processes of cooking, baking and drying in a one single machine, an indispensable combination for products such plant-based meat analogues that require extremely specific and precise processes.

Last, but not least, the possibility to work with a wider and longer belt and still move a considerably lower total air flow in the system compared to existing ovens, delivers the capacity to dehydrate to high levels of weight loss without losing the output capacity required to keep the investment profitability.

### EXAMPLES

Different combinations of temperature, relative humidity and time were tested in order to obtain the optimal application for different protein products, not only meat and fish protein, but also alternative meat plant-based products. The setpoint of each of these parameters together with the final a_{w} of the obtained final product, and their market destination, determined four main categories of product classification which are summarized in the following examples and tables:

### Example 1: Meat protein-based snacks and toppings

The common features shared by the products in this example are that they are fully cooked and shelf stable due to the low final a_{w}, below 0,85, regarded as the lowest limit for the growth of the bacteria of main concern in food safety (D. Kilcast and P. Subramanian. The Stability and Shelf-life of Food. Woodhead Publishing, 2000).

**Table 1. Examples of treatment of meat protein-based snack and toppings**

| **Product** | **Temperature** | **Relative humidity** | **Time** | **Weight loss** | **Remarks** |
|---|---|---|---|---|---|
| Baked chicken crisps | 150 ºC | < 5% | 15 minutes | 75% or more | Fully cooked |
| | | | | | a_{w} < 0,4 |
| RTE Crispy bacon | 100-110 ºC | < 10% | 40 minutes | 60% or more | Fully cooked |
| | | | | | a_{w} < 0,78 |
| Beef Jerky | 50-90 ºC | 30 to 5% | 4 hours | 50% or more | Fully cooked |
| | | | | | a_{w} < 0,85 |

The higher the temperature of the process and the thinner the product geometry, the shorter is the total process time, as water can evaporate faster because of the higher heat transfer and has to go through a lower distance within the product. In some cases, like beef jerky, the maximum process temperature is determined by the effect of an excessive heating on the organoleptic quality of the end product as color becomes darker and texture gets leathery.

Temperature setpoint can be also a determining parameter of the final product appearance and texture of the process. For example, a high temperature will ease the leavening of products like meat crisps with certain added percentage of flour or starch, but will negatively affect some meat products like sliced bacon because the slices will shrink and curl before they arrive to the target weight loss due to the collagen denaturation at high temperatures during the cooking process (Purslow, P.P. Contribution of collagen and connective tissue to cooked meat toughness; some paradigms reviewed. Meat science, 2018).

### Example 2: Fully cooked meat products, not shelf stable

The common features shared by the products in this example are that they are fully cooked, but unlike the previous example, they are not shelf stable because their final a_{w} is usually higher than 0,91 and hence they must be kept chilled, unless pH is reduced below 5,2 combined with common levels of other hurdles like salt and curing agents, among others (FSIS Product Categorization. August 2020).

**Table 2. Examples of treatment of fully cooked meat products, not-shelf stable**

| **Product** | Temperature | Relative humidity | Time | Weight loss | Remarks |
|---|---|---|---|---|---|
| Pre-cooked beef patties | 180 ºC | < 10% | 12 minutes | 15% or more | Fully cooked |
| | | | | | a_{w} > 0,93 |
| Pre-cooked marinated chicken breasts | 95 ºC | 75% | 28 minutes | 8% or less | Fully cooked |
| | | | | | a_{w} > 0,93 |
| Air-fried chicken nuggets | 210 ºC | < 3% | 12 minutes | 15% or more | Fully cooked |
| | | | | | a_{w} > 0,93 |

Products in this example are basically pre-cooked for a better convenience when the costumer prepares them at home, as they just need to be heated again without a full cooking process. But for products where a surface browning effect is desired, higher temperatures will be applied. This kind of products normally contains a minimum percentage of fat tissue in their formulation, so a certain frying effect is achieved when the fat becomes oil, escaping from these tissues and arriving at a temperature high enough.

In some other cases, when products have a very low fat content, a low moisture loss during the process is desired for a better texture and juiciness when consumed. For such kind of applications, a lower temperature (usually below water boiling temperature under normal conditions) and high relative humidity (to improve the heat transfer from the heating media to the product to be cooked) will be chosen as an optimal solution (Devin A. Gredell, Dale R. Woerner, Jerrad F. Legako, Nivaldo de Faria Sant'Ana,Lucas Arantes-Pereira, J. Chance Brooks, J. Daryl Tatum, Robert J. Delmore, and Keith. E. Belk. Understanding the Impact of Oven Temperature and Relative Humidity on the Beef Cooking Process. Meat and Muscle Biology 2(1):334. October, 2018).

### Example 3: Plant-based protein snacks and toppings

Due to the specific features of the product initial composition, rheology and texture profile, a specific plant-based meat analogues product category was devised.

**Table 3. Examples of treatment of plant-based protein snack and toppings**

| **Product** | Temperature | Relative humidity | Time | Weight loss | Remarks |
|---|---|---|---|---|---|
| Plant-based jerky | 75 ºC | < 5% | 50 minutes | 30% or more | Fully cooked |
| | | | | | a_{w} < 0,85 |
| Plant-based pepperoni pizza | 30 ºC | < 20% | 35 minutes | 35% or more | Requires cooking |
| | | | | | Slices chilled after drying |
| Plant-based RTE bacon | 110 ºC | < 5% | 18 minutes | 40% or more | Fully cooked |
| | | | | | a_{w} < 0,85 |
| Air-fried plant-based nuggets | 210 ºC | < 3% | 8 minutes | 20% or more | Fully cooked |
| | | | | | a_{w} > 0,93 |

In general, plant-based meat analogues contain a high amount of high water holding capacity (WHC) ingredients compared to their countertype meat-based products, commonly combined with textured vegetable proteins (TVP) and protein isolates. The final results tends to get easily too dry when cooked and, if starches and hydrocolloids are added, the resulting high WHC can deliver a tougher bite and chewy texture when cooked. To avoid this defect, vegetables oils are added to smooth the mouthfeel and improve the palatability (VK Joshi, Satish Kumar. Meat Analogues: Plant based alternatives to meat products - A review. Intl. J. Food. Ferment. Technol. 5(2): 107-119, December 2015).

Precise control of both heating and drying processes during the cooking treatment is the key to a plant-based meat analogue final product that resembles both in terms of texture and appearance the meat product to fake. In order to avoid over drying that would later negatively affect the product texture, and also to elude the loss of added flavors due to an excess of heating temperature, processing time and temperature for this group of products are commonly lower to that normally used in their countertype meat-based products.

### Example 4: Meat-based pet treats and snacks

The last group is also, together with plant-based meat analogues, a growing demand type of products, as premiumization of the pet food, and specifically pet treat sector, has given as a result a steady increase of sales in the last decade in most developed markets (Richard Rowlands. The latest pet treats trends reflect a mixed bag of formats, formulas and focuses. Pet Food Processing Journal. September 2021).

**Table 4. Examples of treatment of meat-based pet treats and snacks**

| **Product** | Temperature | Relative humidity | Time | Weight loss | Remarks |
|---|---|---|---|---|---|
| Formed chicken jerky pet treat | 95 ºC cooking | 90% | 10 minutes 8 hours | 55% or more | Fully cooked |
| | 65 ºC drying | 60 to 20% | | | a_{w} < 0,72 |
| Semi-moist beef chunks | 95 ºC cooking | 90% | 6 minutes 6 hours | 55% | Fully cooked |
| | 65 ºC drying | 60 to 20% | | | a_{w} < 0,72 |
| Dry chicken necks | 105ºC | < 5% | 10 hours | 70% or more | Fully cooked |
| | | | | | a_{w} < 0,7 |
| Meat-based protein biscuits | 115ºC | < 5% | 35 minutes | 50% or more | Fully cooked |
| | | | | | a_{w} < 0,6 |

The main feature of all the products in this example is that they are fully cooked to a very high temperature (usually 90ºC core temperature) for a higher level of food safety. This is mainly related to the fact that formulation of these products usually contains offal, by-products and mechanically recovered meat (MRM) up to certain percentage, which are known to have high counts of mesophilic bacteria and Enterobacteriaceae (Wong, T.L., Horn, B., Graham, C., Paulin, S.. Bacterial concentrations of poultry offal and in mechanically separated meat products at the processing plant. MAF Technical Paper No: 2011/59).

A second main characteristic for the products under this example is the low a_{w}, as not only they are shelf-stable, but the common shelf life of the packaged product is twelve months or more at room temperature. This requirement means that high weight losses are sought; so long processing times must be used.

To overcome the output capacity drop related to long processing times, QDSBake^{®} versions with belt widths up to 1200mm and usable belt length up to 1500 meters are available for a higher product load. This solution is combined with specific product treatment areas with independent temperature and relative humidity adjustments and air flow sense turning to perform an even drying and cooking of all the products on the belt.

In some cases, when products are formed from minced meat containing MRM and/or offals and by-products, an initial cooking step with high relative humidity is recommended to fully cook the product before running a drying process. The advantage of this combination with the subsequent drying is that pasteurization is achieved at the very beginning of the process and later drying can be done at lower temperatures to avoid color loss and oily appearance of the final product.

## Claims

1. Method to thermally treat food products in an oven-plant that comprises an oven and an external heating unit, wherein:
the food products are submitted to a constant controlled laminar flow of air for a predetermined time, and
the constant controlled laminar flow of air is heated in the external heating unit,
**characterized in that**:
the air is heated to a temperature that is selected according to a nature, size and composition of the food products to be treated, being the selected temperature up to 250 ºC,
thermally treating food products includes cooking until the food product reaches a given internal temperature, a weight loss and/or an activity water, and further baking and/or
dehydrating according to said nature, size and composition of the food products to be treated,
wherein the cooking, and further baking and/or dehydrating of food products is performed in the same oven,
and the constant controlled laminar flow of air is equal to or lower than 2 m/s.

2. The method according to claim 1, wherein the constant controlled laminar flow includes vapor allowing for relative humidity control in the oven.

3. The method according to any one of the previous claims, wherein the food products are disposed onto a conveyor belt defining a path extending through the oven.

4. The method according to any one of the previous claims, wherein the conveyor belt is disposed on a spiral comprising a plurality of belt tiers.

5. The method according to any one of the previous claims, wherein the constant controlled heated laminar flow of air is laterally delivered and to one, to more than one and/or to all the belt tiers.

6. The method according to claim 5, wherein the constant controlled heated laminar flow of air is supplied by means of an air distribution pipe and is extracted by means of an air collection pipe, the air distribution pipe and the air collection pipe arranged opposite, on opposed sides of the belt tiers.

7. The method according to any one the previous claims, wherein the heated laminar flow of air has a relative humidity of between 2% to 95% and is selected according to the nature, size and composition of the food products to be treated.

8. The method according to claim 7, wherein the relative humidity is of between 5% and 30%.

9. The method according to claim 7, wherein the relative humidity is of between 35% and 80%.

10. The method according to any one of the previous claims, wherein the time of thermally treating food is between 5 minutes and 10 hours and is selected according to the nature, size and composition of the food products to be treated.

11. The method according to any one of the previous claims, wherein the air is heated to a temperature of 60ºC to 230 ºC.

12. The method according to any one of the previous claims, wherein the activity water reached by the food products is lower than 0,8.

13. The method according to any one of the previous claims, wherein the weight loss of the food products is 15% or more.

14. The method according to any one of the previous claims, wherein the food products are selected from meat protein-based snacks, meat products, plant-based protein snacks and meat-based pet treat and snacks.

15. The method according to claim 14, wherein the food products are a ready-to-eat meat-based or plant-based food products.
